# EUROPEAN PATENT APPLICATION

(11) **EP 4 109 665 A1**
(43) Date of publication of application: **28.12.2022**
(21) Application number: 21872805.3
(22) Date of filing: 13.09.2021
(51) Int. Cl.: H01M 50/528, H01M 10/04, H01M 50/153, B23K 26/21, B23K 101/38

(54) **BUTTON-TYPE SECONDARY BATTERY**

(30) Priority: 25.09.2020 KR 20200125154; 27.08.2021 KR 20210113895
(71) Applicant: LG Energy Solution, Ltd., Seoul 07335 (KR)
(72) Inventor: JUNG, Ji Min, Daejeon 34122 (KR); LEE, Je Jun, Daejeon 34122 (KR); LEE, Jin Soo, Daejeon 34122 (KR); SON, Bu Won, Daejeon 34122 (KR); LIM, Jae Won, Daejeon 34122 (KR); LEE, Jin Yeong, Daejeon 34122 (KR)
(74) Representative: Hoffmann Eitle
(86) International application number: PCT/KR2021/012439
(87) International publication number: WO 2022/065776

(57) **Abstract**

The present invention relates to a button-type secondary battery, which can significantly improve the welding strength with which an electrode tab is welded to a can case, and thus relates to a button-type secondary battery, which has a high level of impact resistance and is in a condition capable of passing a mechanical welding strength test (mechanical test). The button-type secondary battery according to the present invention comprises: an electrode assembly formed by alternately stacking electrodes and separators; a can case in which the electrode assembly is accommodated in the inner accommodating space thereof; and an electrode tab having one side connected to the electrodes of the electrode assembly and the other side connected to the can case by welding, wherein a welding pattern appearing in a welded portion where the electrode tab is welded to the can case includes a circular shape and an additional shape in addition to the circular shape.

## Description

### CROSS-REFERENCE TO RELATED APPLICATION

The present application claims the benefit of the priority of Korean Patent Application Nos. 10-2020-0125154, filed on September 25, 2020, and 10-2021-0113895, filed on August 27, 2021, which are hereby incorporated by reference in their entirety.

### TECHNICAL FIELD

The present invention relates to a button-type secondary battery, and more particularly, to a button-type secondary battery, in which welding strength, at which an electrode tab is welded to a can case, is significantly improved to give a condition having a high level of impact resistance so as to pass a mechanical welding strength test (hereinafter, referred to as a mechanical test).

### BACKGROUND ART

In recent years, the price of energy sources increases due to the depletion of fossil fuels, the interest in environmental pollution is amplified, and the demand for eco-friendly alternative energy sources is becoming an indispensable factor for future life. Accordingly, studies on various power generation technologies such as solar power, wind power, and tidal power are continuing, and power storage devices such as batteries for more efficiently using the generated electrical energy are also of great interest.

Furthermore, as technology development and demand for electronic mobile devices and electric vehicles using batteries increase, the demands for batteries as energy sources are rapidly increasing. Thus, many studies on batteries which are capable of meeting various demands have been conducted.

In particular, in terms of materials, there is a high demand for lithium secondary batteries such as lithium ion batteries and lithium ion polymer batteries having advantages such as high energy density, discharge voltage, and output stability.

The secondary batteries are classified into cylindrical batteries and prismatic batteries, in which an electrode assembly is embedded in a cylindrical or prismatic metal can, and pouch-type batteries, in which an electrode assembly is embedded in a pouch-type case made of an aluminum laminate sheet according to shapes of battery cases. Also, recently, due to the trend of smaller wearable devices, the importance of developing small batteries such as button-type secondary batteries has been highlighted.

In the button-type secondary battery according to the related art, an electrode tab protruding from an electrode assembly is simply welded to a metal battery case without a special shape so that the electrode tab and the metal battery case are electrically connected to each other. In this type of welding, there is a problem that the electrode tab is easily separated from the metal battery case, or electrical resistance increases because welding strength is weak. That is, impact resistance is very weak. As a result, it is difficult to pass a mechanical test for ensuring excellent quality of the secondary battery. Therefore, it is necessary to develop a welding pattern that satisfies the needs of consumers and has stability and excellent impact resistance.

### DISCLOSURE OF THE INVENTION

### TECHNICAL PROBLEM

The present invention has been devised to solve the above problems, and an object of the present invention is to a button-type secondary battery, in which welding strength, at which an electrode tab is welded to a can case, is significantly improved to give a condition having a high level of impact resistance so as to pass a mechanical test.

### TECHNICAL SOLUTION

A button-type secondary battery according to the present invention comprises: an electrode assembly in which electrodes and separators are alternately stacked; a can case having an internal accommodation space in which the electrode assembly is accommodated; and an electrode tab having one side connected to each of the electrodes of the electrode assembly and the other side connected to the can case through welding, wherein a welding pattern appearing at a welding part, at which the electrode tab is welded to the can case, comprises a circular shape and an additional shape in addition to the circular shape.

In the button-type secondary battery according to the present invention, the circular shape may comprise a circular shape of which one side is opened.

An opening angle of the opened portion in the circular shape of the welding pattern may range of 30 degrees or more and less than 120 degrees.

The additional shape may be formed in the form of a line segment.

The additional shape may be formed inside the circular shape.

The circular shape may comprise a circular shape of which one side is opened, the additional shape may be formed inside the circular shape, and one end of the line segment may face the opened portion of the circular shape.

A diameter of the circular shape may have a value ranging of 1.0 mm to 2.0 mm.

A thickness of the circular shape may have a value ranging of 100 um to 150 um.

An end of the additional shape may be within a range of a virtual circle drawn by the circular shape.

The welding pattern may have a symmetrical shape based on the additional shape in the form of the line segment.

At least two additional shapes in the form of line segments may be formed, and the additional shapes may be side by side with each other.

In the button-type secondary battery according to the present invention, the can case may comprise an upper can and a lower can, the electrode assembly may comprise a jelly roll-type electrode assembly, in which the electrodes and the separators are alternately stacked to be wound, a center hole may be formed in a winding center of the jelly roll-type electrode assembly, and the welding pattern may be formed at a position corresponding to a position at which the center hole is formed.

The welding pattern may be formed on a bottom part of the lower can.

Welding beads formed on the welding part may be formed inward from the outside of the can case.

### ADVANTAGEOUS EFFECTS

The button-type secondary battery according to the present invention may comprise: the electrode assembly, in which electrodes and separators are alternately stacked; the can case, in which the electrode assembly is accommodated in the internal accommodation space; and the electrode tab having one side connected to the electrode of the electrode assembly and the other side connected to the can case through the welding, wherein the welding pattern appearing at the welding part, at which the electrode tab is welded to the can case, has the circular shape and the additional shape in addition to the circular shape to significantly improve the welding strength, at which the electrode tab is welded to the can case, thereby giving the condition having the high level of impact resistance so as to pass the mechanical test.

### BRIEF DESCRIPTION OF THE DRAWINGS

FIG. 1 is a perspective view of a button-type secondary battery according to Embodiment 1 of the present invention.
FIG. 2 is a cross-sectional view taken along the line A-A of FIG. 1.
FIG. 3 is a plan view illustrating a welding pattern in the button-type secondary battery according to Embodiment 1 of the present invention.
FIG. 4 is a plan view illustrating a welding pattern in a button-type secondary battery according to Embodiment 2 of the present invention.
FIG. 5 is an experimental result table showing welding strength test results.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

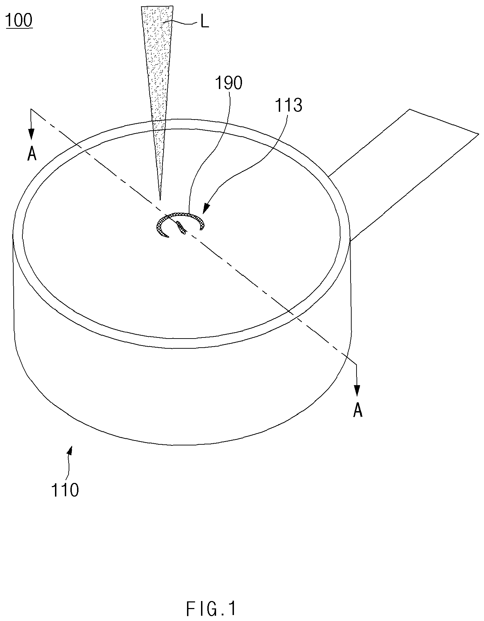

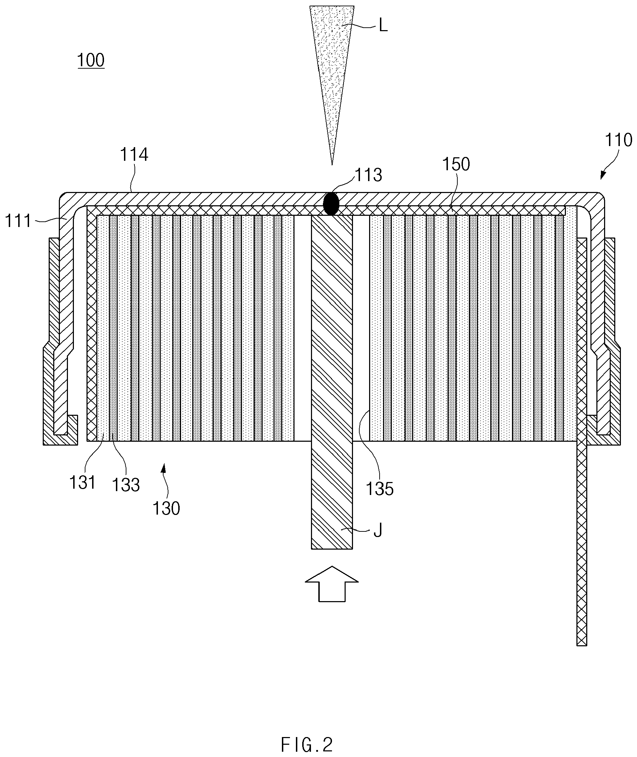

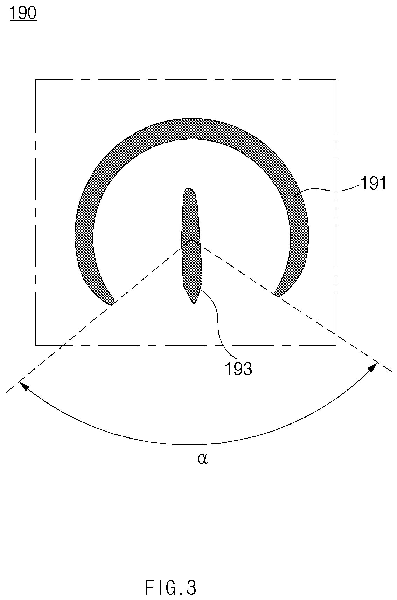

FIG. 1 is a perspective view of a button-type secondary battery according to Embodiment 1 of the present invention. FIG. 2 is a cross-sectional view taken along the line A-A of FIG. 1. FIG. 3 is a plan view illustrating a welding pattern in the button-type secondary battery according to Embodiment 1 of the present invention.

Referring to FIGS. 1 to 3, a button-type secondary battery 100 according to Embodiment 1 of the present invention may be a battery having a cylindrical shape, and a diameter of the cylindrical battery may be greater than a height of the battery.

The button-type secondary battery 100 according to Embodiment 1 of the present invention may comprise an electrode assembly 130, a can case 110, and an electrode tab 150. The electrode assembly 130 may have a shape in which electrodes 131 and separators 133 are alternately stacked. The can case 110 may be a metal case in which the electrode assembly 130 is accommodated in an internal accommodation space. The electrode tab 150 may be a portion, through which current of the electrode 131 of the electrode assembly 130 is transmitted to an external terminal, and may have one side connected to the electrode 131 of the electrode assembly 130 and the other side connected to the can case 110 through welding.

In the button-type secondary battery 100 according to Embodiment 1 of the present invention, in particular, the electrode tab 150 is welded to the can case 110, and a welding pattern 190 appearing at a welding part 113 that is a portion, at which the electrode tab 150 is welded to the can case 110, comprises a circular shape 191 and an additional shape 193 in addition to the circular shape 191. The additional shape 193 may be formed to increase in welding strength of the electrode tab 150.

FIG. 3 is a plan view of the secondary battery according to Embodiment 1 of the present invention of FIG. 1 when viewed from above, and shows a specific shape of the welding pattern 190. In the button-type secondary battery 100 according to Embodiment 1 of the present invention, the circular shape 191 may be a circular shape 191 of which one side is opened. When the circular shape 191 is provided as a circular shape having a closed curve so that one side thereof is not opened, an area, on which the welding is doubly performed, occurs. Thus, in order to prevent this phenomenon, the circular shape 191 may be a circular shape of which one side is opened.

In addition, in the button-type secondary battery 100 according to Embodiment 1 of the present invention, an opening angle α of the opened portion in the circular shape 191 of the welding pattern 190 may be less than 120 degrees. In FIG. 3, alpha (α) is shown. The meaning that the opening angle of the opened portion is less than 120 degrees may mean that the alpha (α) illustrated in FIG. 3 is less than 120 degrees. The angle alpha (α) may be an angle formed by two straight lines when a straight line is drawn from a center point of a circle to both ends of the circular shape 191. When the opening angle α of the opened portion in the circular shape 191 is less than 120 degrees, it means that a welding length of the circular shape becomes longer as much more, and thus, an effect of further improving the welding strength may be obtained. In addition, the opening angle α of the opened portion in the circular shape 191 of the welding pattern 190 may be 30 degrees or more. When the opening angle α is 30 degrees or more, force at which the circular shape 191 is attached to the can case 110 may not be weakened. That is, as the opening angle α increases, since the number of portions, at which the circular shape 191 is connected to the can case 110, increases, the force at which the circular shape 191 is attached to the can case 110 may be large. In the button-type secondary battery 100 according to Embodiment 1 of the present invention, the welding pattern 190 may comprise the additional shape 193, and the additional shape 193 may be in the form of a line segment. This additional shape 193 may also be inside the circular shape 191 described above. The appearance of the additional shape 193 is illustrated in detail in FIG. 3.

Specifically, in the button-type secondary battery 100 according to Embodiment 1 of the present invention, the circular shape 191 may be a circular shape 191 of which one side is opened, and the additional shape 193 may be formed inside the circular shape 191 in the form of the line segment. In addition, one end of the additional shape 193 in the form of the line segment may face the opened portion of the circular shape 191. In addition, the additional shape 193 in the form of the line segment may have a shape passing through a center point of a circle of the circular shape 191. Here, a diameter of the circular shape may have a value ranging of 1.0 mm and 2.0 mm. In addition, a thickness of the circular-shaped line may have a value ranging of 100 um and 150 um. In addition, an end of the additional shape may be within a range of a virtual circle drawn by the circular shape. Thus, the welding strength at which the electrode tab is welded to the can case may be significantly improved.

In addition, the welding pattern 190 may have a symmetrical shape based on the additional shape 193 in the form of the line segment. When the welding pattern 190 has the symmetrical shape, more firm and stable welding strength may be realized.

FIG. 2 is a cross-sectional view taken along line A-A of FIG. 1 in a state in which welding is performed on the can case 110 to form the welding pattern 190. That is, the method and shape of the welding pattern 190 may be grasped in more detail through FIG. 2.

In the button-type secondary battery 100 according to Embodiment 1 of the present invention, the can case 110 may comprise an upper can (not shown) and a lower can 111. In FIG. 2, the upper can is not shown, and only the lower can 111 is shown. The electrode assembly 130 is accommodated in the lower can 111. The electrode assembly 130 may be a jelly roll-type electrode assembly 130 in which electrodes 131 and separators 133 are alternately stacked to be wound.

The electrode assembly 130 may be disposed in a shape in which a winding axis is perpendicular to a bottom part 114 of the lower can 111. A center hole 135 may be formed in a center of the jelly roll-type electrode assembly 130. As illustrated in FIG. 2, the lower can 111 in which the electrode assembly 130 is accommodated may be turned upside down. Also, the lower can 111 may be welded while being supported by using a jig J from below.

The jig J may be inserted into the center hole 135 of the electrode assembly 130, and the jig J may support the electrode tab 150 that is in contact with an inner surface of the bottom part 114 of the lower can 111 upward from bottom. The electrode tab 150 may be in close contact with the inner surface of the lower can 111 through the supporting of the jig J. In addition, laser L may be irradiated from the outside of the lower can 111 to the bottom part 114 of the lower can 111 to perform the welding of the electrode tab 150 and the bottom part 114 of the lower can 111. When the welding pattern 190 is formed as described above, the welding pattern 190 may be formed on the bottom part 114 of the lower can 111, and also, the welding pattern 190 may be formed at a position corresponding to the position at which the center hole 135 of the electrode assembly 130 is formed. In this case, the bottom part 114 of the lower can 111 may form a negative electrode terminal, and the electrode tab 150 welded to the bottom part 114 may be a negative electrode tab.

In addition, welding beads formed on the welding part 113 may be formed inward from the outside of the can case 110.

Specifically, since the laser L is irradiated to the outside of the lower can 111 to weld the lower can 111 to the electrode tab 150 inside the lower can 111, the welding beads may be formed inward from the outside of the bottom part 114 of the lower can 111.

As described above, in the button-type secondary battery 100 according to Embodiment 1 of the present invention, the welding strength at which the electrode tab 150 is welded to the can case 110 may be significantly improved. Thus, the button-type secondary battery 100 having a condition that has a high level of impact resistance to pass a mechanical test may be implemented.

### Embodiment 2

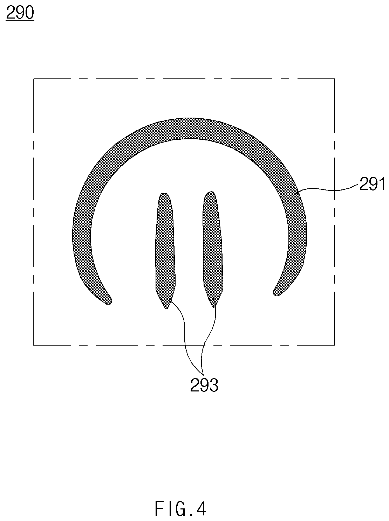

FIG. 4 is a plan view illustrating a welding pattern in a button-type secondary battery according to Embodiment 2 of the present invention. FIG. 4 is a plan view of a welding pattern according to Example 2, which shown in the same manner as in FIG. 3.

Embodiment 2 according to the present invention may be different from Embodiment 1 in that an additional shape 293 of a welding pattern 290 is formed differently.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 4, even in the button-type secondary battery according to Embodiment 2 of the present invention, the welding pattern 290 may have a circular shape 291 of which one side is opened. In addition, in the button-type secondary battery according to Embodiment 2 of the present invention, an opening angle of the opened portion in the circular shape 291 of the welding pattern 290 may be less than 120 degrees. When the opening angle of the opened portion in the circular shape 291 is less than 120 degrees, it means that a welding length becomes longer as much more, and thus, an effect of further improving the welding strength may be obtained.

Even in Embodiment 2, the welding pattern 290 comprises an additional shape 293, which may be in the form of a line segment. However, in this Embodiment 2, two additional shapes 293 in the form of the line segments may be formed. Of course, more than two additional shapes 293 in the form of line segments may be formed. Also, the additional shapes 293 may be side by side with each other.

This additional shape 293 may also be inside the circular shape 291 described above. An example of an appearance of the additional shape 293 is illustrated in detail in FIG. 4.

Specifically, in the button-type secondary battery according to Embodiment 2 of the present invention, the circular shape 291 may be a circular shape 291 of which one side is opened, and the two additional shape 293 may be formed inside the circular shape 291 in the form of two line segments. In addition, one end of each of the additional shapes 293 in the form of the line segments may face the opened portion of the circular shape 291. Also, the two additional shapes 293 in the form of the line segments may have the same length.

In addition, the welding pattern 290 according to Embodiment 2 comprising the circular shape 291 and the two additional shapes 293 in the form of the line segments may have a symmetric shape in a left and right direction. That is, the left and right sides may be symmetrical with respect to a virtual central vertical line between the two additional shapes 293. When the welding pattern 290 has the symmetrical shape, more firm and stable welding strength may be realized.

### <Experimental Result>

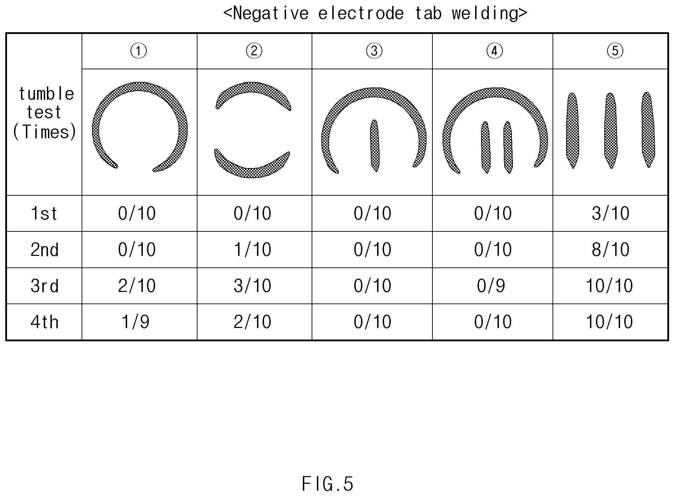

FIG. 5 is an experimental result table showing welding strength test results. It is the result of performing a tumble test for a mechanical test. The table of FIG. 5 shows the number of samples in which defective welding are found after performing the tumble test on about 10 samples.

Referring to FIG. 5, samples ①, (2), and (5) are welding patterns according to Comparative Examples, and samples ③ and ④ are welding patterns according to Embodiments. The sample ① denotes a welding pattern according to Comparative Example 1, the sample ② denotes a welding pattern according to Comparative Example 2, and the sample (5) denotes a welding pattern according to Comparative Example 3. The sample ③ denotes a welding pattern according to Embodiment 1 of the present invention, and the sample ④ denotes a welding pattern according to Embodiment 2 of the present invention.

In the case of the welding with the welding pattern according to Comparative Example 1, no defective samples appear until a 2nd experiment, but 2 samples out of 10 samples were defective in a 3rd experiment, and 1 sample out of 9 samples were defective in a 4th experiment.

In the case of the welding with the welding pattern according to Comparative Example 2, no defective samples appear until a 1st experiment, but 1 sample out of 10 samples was defective in a 2nd experiment, 3 samples out of the 10 samples were defective in a 3rd experiment, and 1 sample out of the 10 samples were defective in a 4th experiment.

In both Embodiments 1 and 2, no defective samples were found even after the experiment was performed up to the fourth times. That is, in Embodiments 1 and 2, it is seen that the welding strength is remarkably improved.

In the case of Comparative Example 3, it is a case of the welding pattern without the circular shape, and in this case, it is seen that defective samples appear from the 1st experiment to the 4th experiment. Also, it is seen that all 10 samples out of the 10 samples are defective from the 3rd experiment or more.

Therefore, it is seen that the welding pattern without the circular shape has the weakest welding strength among the test subjects.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

100: Button-type secondary battery
110: Can case
111: Lower can
113: Welding part
114: Bottom part
130: Electrode assembly
131: Electrode
133: Separator
135: center hole
150: Electrode tab
190, 290: Welding pattern
191, 291: Circular shape
193, 293: Additional shape
L: Laser
J: Jig

## Claims

1. A button-type secondary battery comprising:
an electrode assembly in which electrodes and separators are alternately stacked;
a can case having an internal accommodation space in which the electrode assembly is accommodated; and
an electrode tab having one side connected to each of the electrodes of the electrode assembly and the other side connected to the can case through welding,
wherein a welding pattern appearing at a welding part, at which the electrode tab is welded to the can case, comprises a circular shape and an additional shape in addition to the circular shape.

2. The button-type secondary battery of claim 1, wherein the circular shape comprises a circular shape of which one side is opened.

3. The button-type secondary battery of claim 2, wherein an opening angle of the opened portion in the circular shape of the welding pattern ranges of 30 degrees or more and less than 120 degrees.

4. The button-type secondary battery of claim 1, wherein the additional shape is formed in the form of a line segment.

5. The button-type secondary battery of claim 1, wherein the additional shape is formed inside the circular shape.

6. The button-type secondary battery of claim 1, wherein the circular shape comprises a circular shape of which one side is opened,
the additional shape is formed inside the circular shape and is formed in the form of a line segment, and
one end of the line segment faces the opened portion of the circular shape.

7. The button-type secondary battery of claim 6, wherein a diameter of the circular shape has a value ranging of 1.0 mm to 2.0 mm.

8. The button-type secondary battery of claim 6, wherein a thickness of the circular shape has a value ranging of 100 um to 150 um.

9. The button-type secondary battery of claim 6, wherein an end of the additional shape is within a range of a virtual circle drawn by the circular shape.

10. The button-type secondary battery of claim 6, wherein the welding pattern has a symmetrical shape based on the additional shape in the form of the line segment.

11. The button-type secondary battery of claim 6, wherein at least two additional shapes in the form of line segments are formed, and
the additional shapes are side by side with each other.

12. The button-type secondary battery of claim 1, wherein the can case comprises an upper can and a lower can,
the electrode assembly comprises a jelly roll-type electrode assembly, in which the electrodes and the separators are alternately stacked to be wound,
a center hole is formed in a winding center of the jelly roll-type electrode assembly, and
the welding pattern is formed at a position corresponding to a position at which the center hole is formed.

13. The button-type secondary battery of claim 12, wherein the welding pattern is formed on a bottom part of the lower can.

14. The button-type secondary battery of claim 1, wherein welding beads formed on the welding part are formed inward from the outside of the can case.
